# EUROPÄISCHE PATENTSCHRIFT

(11) **EP 0 967 120 B1**
(45) Veröffentlichungstag und Bekanntmachung des Hinweises auf die Patenterteilung: **02.06.2004**
(21) Anmeldenummer: 99106349.6
(22) Anmeldetag: 27.03.1999
(51) Int. Cl.: B60R 11/02

(54) **Verfahren zum Schutz von an ein Autoradio angeschlossenen Komponenten**
Device for protecting components connected to a car radio
Dispositif de protection de composants reliés à un autoradio

(30) Priorität: 27.06.1998 DE 19828751
(43) Veröffentlichungstag der Anmeldung: 29.12.1999
(73) Patentinhaber: ROBERT BOSCH GMBH, 70442 Stuttgart (DE)
(72) Erfinder: Rathgeber, Stefan, 31171 Roessing (DE)

(56) Entgegenhaltungen:
- EP-A- 0 476 754
- EP-A- 0 813 997
- EP-A- 0 865 970
- DE-C- 3 637 960
- PATENT ABSTRACTS OF JAPAN vol. 014, no. 048 (P-0997), 29. Januar 1990 (1990-01-29) -& JP 01 276396 A (MAZDA MOTOR CORP), 6. November 1989 (1989-11-06)
- PATENT ABSTRACTS OF JAPAN vol. 018, no. 041 (M-1546), 21. Januar 1994 (1994-01-21) -& JP 05 270322 A (FUJITSU TEN LTD), 19. Oktober 1993 (1993-10-19)

## Beschreibung

Die Erfindung betrifft ein Verfahren zum Schutz von an ein Autoradio angeschlossenen Komponenten, die jeweils einen Mikroprozessor aufweisen und über einen Bus mit dem Autoradio verbunden sind.

Es ist bekannt, daß Autoradios einem erhöhten Diebstahlrisiko unterliegen. Demzufolge sind zahlreiche Sicherungsmechanismen bekannt und teilweise in Benutzung genommen worden, mit denen das Autoradio vor einem Diebstahl geschützt wird. Hierzu gehören beispielsweise die Ausbildung des Autoradios mit einem abnehmbaren Bedienteil, eine Einschaltsperre des Autoradios bis zur Eingabe eines individuellen Nummern-Codes, eine Einschaltmöglichkeit des Autoradios nur über eine Key-Card usw. Es kann daher unterstellt werden, daß das Autoradio selbst hinreichend gegen Diebstahl schützbar ist.

Die ständige Erhöhung der Qualität der Musikwiedergabe im Automobil hat dazu geführt, daß seit längerer Zeit immer aufwendigere Komponenten mit dem Autoradio verwendet werden, deren Wert größenordnungsmäßig den Wert des Autoradios entsprechen oder den Wert des Autoradios sogar übersteigen kann. Derartige Komponenten sind beispielsweise Aktivboxen, CD-Wechsler, Navigationsgeräte, externe Displays usw.

Die gattungsbildende EP-A-0 813 997 offenbart ein System zum Diebstahtschutz einer an einen Datenbus angeschlossenen Audiokomponente. Dazu verfügt die Audiokomponente über einen Speicher für eine Soll-Kennung, in den bei erstmaliger Inbetriebnahme der Komponente eine auf dem Datenbus übertragene Adresse eines Teilnehmers eingeschrieben wird. Vor einer erneuten Inbetriebnahme der Komponente vergleicht diese die auf dem Bus übertragenen Adressen mit der gespeicherten Soll-Kennung und gibt die Benutzung des Geräts nur dann frei, wenn eine der Soll-Kennung entsprechende Adresse auf dem Datenbus festgestellt wird.

Patent Abstract of Japan zu JP 01 276396 A offenbart eine Diebstahlschutzeinrichtung für eine Audioanlage in einem Fahrzeug. In Speicher zweier Komponenten der Audioanlage werden Passworte abgelegt und bei Inbetriebnahme verglichen. Stimmen die Passworte nicht überein oder stehen nicht in einem bestimmten Zusammenhang zueinander, wird eine Inbetriebnahme der Anlage oder einzelner ihrer Teile unterbunden. Es ist nicht offenbart, wie die Codes in die Speicher der Komponenten eingeschrieben werden.

Es wäre nun naheliegend, diese in Verbindung mit dem Autoradio benutzten Komponenten in der gleichen Weise wie das Autoradio selbst gegen Diebstahl zu schützen. Dies hätte jedoch erhebliche Handhabungsnachteile, da in alle Komponenten die individuellen Nummern-Codes eingegeben oder diese Komponenten mit Hilfe einer Key-Card separat eingeschaltet werden müßten. Eine derartige Handhabung ist nicht praktikabel, so daß bisher auf einen Diebstahlsschutz für die Komponenten verzichtet werden mußte.

Der Erfindung liegt daher die Problemstellung zugrunde, einen Diebstahlsschutz für an ein Autoradio angeschlossene Komponente zu ermöglichen, der praktikabel handhabbar ist.

Ausgehend von dieser Problemstellung ist ein Verfahren der eingangs erwähnten Art erfindungsgemäß dadurch gekennzeichnet, daß beim ersten Anschließen der Komponente an das Autoradio vom Autoradio an die Komponente über den Bus ein spezifisches Kennungssignal übermittelt wird, das in der Komponente für den Benutzer zugriffssicher abgespeichert wird und daß bei einem erneuten Einschalten das in der Komponente abgespeicherte Kennungssignal mit dem Kennungssignal des Autoradios verglichen und die Komponente und/oder das Autoradio nur dann betriebsbereit geschaltet wird, wenn das Kennungssignal des Autoradios mit dem abgespeicherten Kennungssignal übereinstimmt.

Durch das erfindungsgemäße Verfahren wird eine Diebstahlsicherung realisiert, die das für sich diebstahlgesicherte Autoradio als "Wächter" benutzt. Durch das erfindungsgemäße Verfahren wird beim Anschluß einer fabrikneuen Komponente an das Autoradio diese Komponente durch das vom Autoradio übermittelte und in der Komponente abgespeicherte Kennungssignal dem Autoradio zugeordnet. Nur wenn die Zuordnung zum Autoradio bestehen bleibt, ist die Komponente betreibbär. Das Wegnehmen einer Komponente ist daher sinnlos, da sie an ein anderes Autoradio nicht betriebsfähig anschließbar ist. Das erfindungsgemäße Konzept realisiert somit eine Diebstahlssicherung, die keine zusätzlichen Handhabungen durch den Benutzer erfordern.

Für den Fall, daß eine Komponente legal an ein anderes Autoradio angeschlossen werden soll, weil die Komponente verkauft worden ist oder der Eigentümer der Komponente diese beispielsweise an ein ausgewechseltes Autoradio anschließen will, kann vorgesehen werden, daß über das als zugehörig erkannte Autoradio die beim ersten Anschließen der Komponente vorgenommene Zuordnung der Komponente zu dem Autoradio wieder aufgehoben wird. Für den Fall, daß eine derartige Freigabe der Komponente durch das Autoradio nicht mehr möglich ist, weil dieses nicht mehr funktionstüchtig ist, können autorisierte Fachhändler die Freischaltung der Komponente mit einer speziellen Decoderbox vornehmen, wenn der Eigentumsnachweis stattgefunden hat.

Der beim erneuten Einschalten des Autoradios erfindungsgemäß stattfindende Vergleich zwischen dem Kennungssignal des Autoradios und dem in der Komponente abgespeicherten Kennungssignals kann dadurch erfolgen, daß das spezifische Kennungssignal vom Autoradio auf die Komponente zur Durchführung des Vergleichs in der Komponente wiederholt wird. Gegenüber einem auch denkbaren Vergleich im Autoradio ist bei diesem Verfahren eine höhere Sicherheit gegen Manipulationen gewährleistet.

Zur Verstärkung der Zuordnung zwischen Komponente und dem Autoradio kann beim ersten Anschließen auch von der Komponente an das Autoradio ein spezifisches Kennungssignal übermittelt werden, das im Autoradio abgespeichert und bei jedem erneuten Einschalten mit dem dann von der Komponente an das Autoradio wieder übermittelten Kennungssignal verglichen wird. Auf diese Weise wird ein doppelter Vergleich realisiert.

Es kann zweckmäßig sein, das zum Zwecke der Abspeicherug in der Komponente vom Autoradio übermittelte Kennungssignal mit einer Einwegverschlüsselung zu übertragen, um zu verhindern, daß aus der Analyse des abgelegten Datenwortes in der Komponente das Kennungssignal des zugehörigen Autoradios ermittelbar ist.

Die Erfindung soll im folgenden anhand der beigefügten Prinzipschaltung näher erläutert werden.

In der Prinzipskizze ist ein für sich diebstahlgesichertes Autoradio 1 mit einem Mikroprozessor 2 versehen, an den ein Speicher 3 angeschlossen ist. Der Mikroprozessor 2 organisiert die Verbindung des Autoradios 1 mit zwei Aktivlautsprechern 4, 5 über einen Lautsprecherbus 6. Der Lautsprecherbus 6 endet in den Aktivlautsprechern 4, 5 an jeweils einem Mikroprozessor 7, 8, an die jeweils ein Speicher 9, 10 angeschlossen ist.

Dargestellt ist ferner eine Verbindung des Autoradios 1 über seinen Mikroprozessor 2 und einen weiteren Bus 11 mit beispielsweise einem CD-Wechsler 12. Auch dieser ist mit dem Bus 11 durch einen Mikroprozessor 13 verbunden, der mit einem Speicher 14 zusammenarbeitet.

Die Aktivlautsprecher 4, 5 und der CD-Wechsler 12 stellen somit an das Autoradio 1 angeschlossene Komponenten 4, 5, 12 dar, die einen nicht unerheblichen Wert haben und daher erfindungsgemäß über das Autoradio 1 diebstahlsgeschützt sind.

Hierzu ist vorgesehen, daß beim ersten Anschluß der Komponenten 4, 5, 12 über den jeweiligen Bus 6, 11 ein Kennungssignal von dem Autoradio 1 auf die Komponenten 4, 5, 12 übertragen wird. In den Komponenten 4, 5, 12 erkennen die Mikroprozessoren 7, 8, 13 das Kennungssignal und legen das Kennungssignal in dem zugehörigen Speicher 9, 10, 14 ab. Wesentlich für die Erfindung ist, daß die Ablage in dem Speicher 9, 10, 14 nicht durch ein Kennungssignal eines anderen Autoradios überschreibbar ist. Allenfalls kann vorgesehen werden, daß das dem abgelegten Kennungssignal zugeordnete Autoradio 1 selbst in einem speziellen Programm die entsprechenden Komponenten 4, 5, 12 freigeben kann, indem das durch das Autoradio 1 veranlaßt abgespeicherte Kennungssignal in den Speicher 9, 10, 14 gelöscht wird und somit die vom Autoradio 1 veranlaßte Zuordnung der Komponenten 4, 5, 12 zum Autoradio 1 aufgehoben wird.

Zur Herstellung der Zuordnung zwischen Autoradio 1 und Komponenten 4, 5, 12 wird ferner bei der ersten Inbetriebnahme der Komponenten 4, 5, 12, die somit noch nicht mit einem Kennungssignal in dem zugehörigen Speicher 9, 10, 14 beschrieben sind, ein eigenes Kennungssignal durch die Mikroprozessoren 7, 8, 13 auf den Mikroprozessor 2 des Autoradios 1 übermittelt und durch den Mikroprozessor 2 in dem Speicher 3 des Autoradios 1 abgelegt. Bei einem späteren erneuten Einschalten des Autoradios 1 findet somit eine gegenseitige Identifikation zwischen Autoradio 1 und Komponenten 4, 5, 12 statt, die eine Voraussetzung für die Schaltung der Komponenten 4, 5, 12 und/oder des Autoradios 1 in einen betriebsfähigen Zustand ist. Dabei ist zweckmäßig, wenn wenigstens einer der Vergleiche der abgespeicherten und übermittelten Kennungssignale durch den Mikroprozessor 7, 8, 13 der angeschlossenen Komponente 4, 5, 12 erfolgt.

Der erfindungsgemäße Diebstahlsschutz für die Komponenten 4, 5, 12 erfordert somit im Normalbetrieb keine einzige zusätzliche Handhabung des Benutzers. Lediglich für den sehr selten vorkommenden Fall, daß Komponenten gewollt und legal mit einem anderen Autoradio betrieben werden sollen, ist es erforderlich, die Zuordnung der Komponenten 4, 5, 12 zu dem Autoradio 1 aufzuheben. Hierzu kann das Autoradio 1 mit einem speziellen Programm versehen sein, das durch den Benutzer nur mit besonderen Zugangsberechtigungen (Key-Card, besonderer Code o.ä.) ausgeführt werden kann.

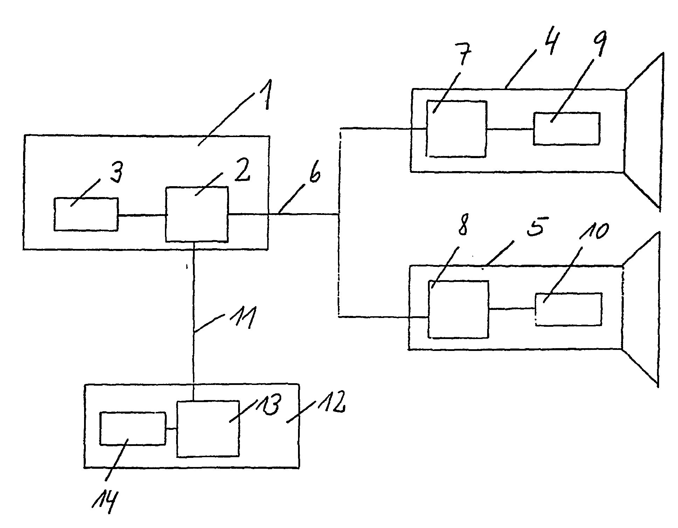

## Patentansprüche

1. Verfahren zum Schutz von an ein Autoradio (1) angeschlossenen Komponenten (4, 5, 12), die jeweils einen Mikroprozessor (7, 8, 13) aufweisen und über einen Bus (6, 11) mit dem Autoradio (1) verbunden sind, **dadurch gekennzeichnet, daß** beim ersten Anschließen der Komponente (4, 5, 12) an das Autoradio (1) vom Autoradio (1) an die Komponente (4, 5, 12) über den Bus (6, 11) ein spezifisches Kennungssignal des Autoradios übermittelt wird, das in der Komponente (4, 5, 12) für den Benutzer zugriffssicher abgespeichert wird und daß bei einem erneuten Einschalten das in der Komponente (4, 5, 12) abgespeicherte Kennungssignal mit dem Kennungssignal des Autoradios (1) verglichen und die Komponente (4, 5, 12) und/oder das Autoradio (1) nur dann betriebsbereit geschaltet wird, wenn das Kennungssignal des Autoradios (1) mit dem abgespeicherten Kennungssignal übereinstimmt.

2. Verfahren nach Anspruch 1, **dadurch gekennzeichnet, daß** bei einem erneuten Einschalten-die Übertragung des spezifischen Kennungssignals des Autoradios (1) zur Durchführung des Vergleichs in der Komponente (4, 5, 12) wiederholt wird.

3. Verfahren nach Anspruch 1 oder 2, **dadurch gekennzeichnet, daß** beim ersten Anschließen auch von der Komponente (4, 5, 12) an das Autoradio (1) ein spezifisches Kennungssignal übermittelt wird, das im Autoradio (1) abgespeichert und bei jedem erneuten Einschalten mit dem dann von der Komponente (4, 5, 12) an das Autoradio (1) wieder übermittelte Kennungssignal verglichen wird.

4. Verfahren nach einem der Ansprüche 1 bis 3, **dadurch gekennzeichnet, daß** das Kennungssignal vom Autoradio (1) mit einer Einwegverschlüsselung übertragen wird.

## Claims

1. Method for protecting components (4, 5, 12) which are connected to a car radio (1) and which each have a microprocessor (7, 8, 13) and are connected to the car radio (1) via a bus (6, 11), **characterized in that** connection of the component (4, 5, 12) to the car radio (1) for the first time prompts the car radio (1) to transmit to the component (4, 5, 12) via the bus (6, 11) a specific identifier signal for the car radio which is stored in the component (4, 5, 12) such that said identifier signal cannot be accessed by the user, and **in that** turning on again prompts the identifier signal stored in the component (4, 5, 12) to be compared with the identifier signal from the car radio (1), and the component (4, 5, 12) and/or the car radio (1) is switched to standby only if the identifier signal from the car radio (1) matches the stored identifier signal.

2. Method according to Claim 1, **characterized in that** turning on again prompts transfer of the specific identifier signal for the car radio (1) to be repeated for the purpose of performing the comparison in the component (4, 5, 12).

3. Method according to Claim 1 or 2, **characterized in that** connection for the first time also prompts the component (4, 5, 12) to transmit to the car radio (1) a specific identifier signal which is stored in the car radio (1) and, whenever the component is turned on again, is compared with the identifier signal which is then transmitted to the car radio (1) by the component (4, 5, 12) again.

4. Method according to one of Claims 1 to 3, **characterized in that** the identifier signal is transferred by the car radio (1) with one-way encryption.

## Revendications

1. Procédé de protection de composants (4, 5, 12) reliés à un autoradio (1), qui présentent respectivement un microprocesseur (7, 8, 13) et qui sont reliés à l'autoradio (1) par le biais d'un bus (6, 11),
**caractérisé en ce que**
lors du premier raccordement des composants (4, 5, 12) à l'autoradio (1), un signal d'identification spécifique est transmis à partir de l'autoradio (1) vers les composants (4, 5, 12) par le biais du bus (6, 11), ce signal d'identification étant enregistré dans les composants (4, 5, 12) de façon inaccessible pour l'utilisateur, et lors d'une nouvelle mise en marche, le signal d'identification enregistré dans les composants (4, 5, 12) est comparé avec le signal d'identification de l'autoradio (1) et les composants (4, 5, 12) et/ou l'autoradio (1) ne sont activés pour être prêts à fonctionner que lorsque le signal d'identification de l'autoradio (1) concorde avec le signal d'identification enregistré.

2. Procédé selon la revendication 1,
**caractérisé en ce que**
lors d'une nouvelle mise en marche, la transmission du signal d'identification spécifique de l'autoradio (1) est répétée, afin de procéder à la comparaison dans les composants (4, 5, 12).

3. Procédé selon la revendication 1 ou 2,
**caractérisé en ce que**
lors du premier raccordement, un signal d'identification spécifique est également transmis à partir des composants (4, 5, 12) vers l'autoradio (1), ce signal d'identification étant enregistré dans l'autoradio (1) et étant comparé lors de chaque nouvelle mise en marche avec le signal d'identification alors à nouveau transmis à partir des composants (4, 5, 12) vers l'autoradio (1).

4. Procédé selon l'une quelconque des revendications 1 à 3,
**caractérisé en ce que**
le signal d'identification est transmis à partir de l'autoradio (1) avec un codage unique.
